(19) Europäisches Patentamt / European Patent Office / Office européen des brevets

(11) **EP 3 314 337 B1**

(12) **FASCICULE DE BREVET EUROPEEN**

(45) Date de publication et mention de la délivrance du brevet:
**07.08.2019 Bulletin 2019/32**

(21) Numéro de dépôt: **16741094.3**

(22) Date de dépôt: **20.06.2016**

(51) Int Cl.:
**B60W 10/06** *(2006.01)*     **B60L 11/18** *(2006.01)*
**B60W 20/13** *(2016.01)*     **B60W 50/00** *(2006.01)*
**G05B 13/04** *(2006.01)*     **B60W 10/08** *(2006.01)*

(86) Numéro de dépôt international:
**PCT/FR2016/051500**

(87) Numéro de publication internationale:
**WO 2016/207528 (29.12.2016 Gazette 2016/52)**

(54) **PROCÉDÉ DE COMMANDE D'UN FACTEUR D'ÉQUIVALENCE ÉNERGÉTIQUE POUR UN VÉHICULE AUTOMOBILE HYBRIDE**

VERFAHREN ZUR STEUERUNG EINES ENERGIEÄQUIVALENZFAKTORS FÜR EIN HYBRIDKRAFTFAHRZEUG

METHOD FOR CONTROLLING AN ENERGY EQUIVALENCE FACTOR FOR A HYBRID MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2015 FR 1555874**

(43) Date de publication de la demande:
**02.05.2018 Bulletin 2018/18**

(73) Titulaire: **Renault S.A.S.**
**92100 Boulogne-Billancourt (FR)**

(72) Inventeur: **MALOUM, Abdelmalek**
**94550 Chevilly Larue (FR)**

(56) Documents cités:
**FR-A1- 2 988 674     US-A- 6 166 449**

• **JYH-SHIN CHEN ET AL: "Learning Energy Management Strategy for Hybrid Electric Vehicles", VEHICLE POWER AND PROPULSION, 2005 IEEE CONFERENCE CHICAGO, IL, USA 07-09 SEPT. 2005, PISCATAWAY, NJ, USA,IEEE, 7 septembre 2005 (2005-09-07), pages 427-432, XP010861297, DOI: 10.1109/VPPC.2005.1554593 ISBN: 978-0-7803-9280-9**

**Description**

La présente invention se rapporte à un procédé de commande d'un facteur d'équivalence énergétique pour un véhicule automobile hybride.

La présente invention concerne la gestion de répartition des flux énergétiques dans un groupe motopropulseur hybride de véhicule automobile.

Plus précisément, elle a pour objet la détermination d'un facteur énergétique d'équivalence représentant la pondération appliquée entre l'apport d'énergie d'origine thermique et l'apport d'énergie d'origine électrique, pour minimiser sur un point de fonctionnement la consommation énergétique globale d'un groupe motopropulseur hybride de véhicule automobile, du type comprenant un moteur thermique et au moins un moteur électrique alimenté par une batterie.

Un groupe motopropulseur de véhicule automobile à propulsion ou à traction hybride comprend un moteur thermique et une ou plusieurs machines électriques, alimentées par au moins une batterie embarquée à bord du véhicule.

Les systèmes de commande des groupes motopropulseurs hybrides sont conçus pour gérer le fonctionnement et la synchronisation des différents moteurs en fonction des conditions de roulage, afin de limiter la consommation de carburant et de minimiser les émissions de particules polluantes.

On parle de gestion des flux d'énergies thermique et électrique, pour désigner notamment la stratégie de pilotage mise en oeuvre dans le système de commande en vue d'optimiser la répartition de puissance entre les flux d'énergie thermique et les flux d'énergie électrique. Le principe mis en oeuvre pour choisir le meilleur point de fonctionnement consiste à minimiser la somme de la consommation thermique et de la consommation électrique en pondérant l'énergie d'origine électrique par un facteur de pondération ou d'équivalence.

Ce facteur pondère l'énergie électrique avec l'énergie thermique, c'est-à-dire qu'il donne la quantité de carburant nécessaire pour recharger d'une certaine quantité d'énergie électrique stockée dans la batterie ou, avec un raisonnement inverse, la quantité de carburant capable d'être économisée en utilisant une certaine quantité d'énergie provenant de la batterie.

On connait notamment la demande de brevet FR2988674, déposée par la demanderesse, qui divulgue un procédé de commande d'un facteur d'équivalence mettant en oeuvre une commande de régulation proportionnelle-intégrale, aussi appelée régulation PI.

Cependant, une telle commande de régulation PI a besoin pour fonctionner de manière optimale d'une connaissance préalable du système régulé ainsi que sa dynamique. D'un point de vue technique, il s'agit de l'étape d'étalonnage des gains proportionnel-intégral du régulateur PI. Cette étape d'étalonnage est relativement longue et doit être effectuée avant la mise en oeuvre du procédé de commande.

En outre, cet étalonnage est relativement complexe, en particulier en ce qui concerne l'étalonnage du gain proportionnel, dans la mesure où la dynamique du système est, par définition, inconnue au moment de l'étalonnage.

De plus, l'étalonnage du gain proportionnel ne peut compenser des perturbations non prises en compte, en particulier la puissance énergétique consommées par les éléments auxiliaires du véhicule automobile, par exemple le système multimédia embarqué, la climatisation du véhicule automobile, les calculateurs, etc.

De ce fait, l'étape d'étalonnage est longue et doit être effectuée à chaque fois que la commande de régulation est appliquée à un modèle de véhicule différent.

Ceci rend ce procédé de commande relativement coûteux à adapter à différents modèles de véhicules automobiles.

Aussi, il existe un besoin pour un procédé de commande d'un facteur d'équivalence énergétique plus simple à adapter à différents modèles de véhicules automobiles.

On propose un procédé de commande d'un facteur d'équivalence énergétique correspondant à une valeur de pondération appliquée entre un apport d'énergie d'origine thermique et un apport d'énergie d'origine électrique, pour minimiser sur un point de fonctionnement la consommation énergétique globale d'un groupe motopropulseur hybride pour un véhicule automobile comprenant un moteur thermique et au moins un moteur électrique alimenté par un accumulateur électrique.

Le procédé comprend une étape d'estimation d'une valeur dudit facteur d'équivalence énergétique en fonction de la différence entre une valeur instantanée de l'état d'énergie de l'accumulateur électrique et une valeur cible de l'état d'énergie de l'accumulateur électrique.

L'étape d'estimation comprend :

- une étape de comparaison de ladite différence avec au moins une valeur de seuil positive et au moins une valeur de seuil négative, et
- une étape de calcul de la valeur estimée du facteur d'équivalence énergétique, ladite valeur estimée étant :

  ○ proportionnelle à une valeur maximale prédéterminée lorsque ladite différence est inférieure à ladite valeur de seuil négative, ou
  ○ proportionnelle à une valeur minimale prédéterminée lorsque ladite différence est supérieure à ladite valeur de seuil positive, ou
  ○ fonction de ladite différence, desdites valeurs de seuil négative et positive, et des valeurs minimales et maximales prédéterminées lorsque ladite différence est comprise entre la valeur de seuil négative et la valeur de seuil positive.

Ainsi l'étape d'estimation est indépendante des paramètres du système, en particulier des conditions de roulage et des paramètres dynamique du véhicule automobile. Autrement dit le procédé est robuste.

En outre, le système est adaptatif, dans la mesure où l'étape d'estimation prend en compte la différence, aussi appelée l'erreur, entre une valeur instantanée de l'état d'énergie de l'accumulateur électrique et une valeur cible de l'état d'énergie de l'accumulateur électrique avant d'évaluer une valeur estimée du facteur d'équivalence énergétique. Autrement dit, on regarde le système à commander avant d'agir.

De cette manière, ce procédé est relativement simple à adapter à des véhicules automobiles différents. Il peut en outre être utilisé sans qu'il ne soit nécessaire de connaître les conditions de roulage du véhicule automobile.

Par l'étape de comparaison de ladite différence avec au moins une valeur de seuil positive et au moins une valeur de seuil négative, on peut contrôler le facteur d'équivalence énergétique, dans les modes de charge et de décharge de l'accumulateur électrique. En effet le signe de la différence est, d'une manière générale, fonction du mode de fonctionnement de l'accumulateur électrique à l'instant d'exécution du procédé.

Lorsque ladite différence est comprise entre la valeur de seuil négative et la valeur de seuil positive, on peut contrôler la valeur estimée du facteur d'équivalence énergétique lorsque l'erreur est comprise entre les deux valeurs de seuil ; autrement dit, lorsque l'erreur est faible. Ainsi, on stabilise le système de manière à optimiser le fonctionnement énergétique global du véhicule automobile.

Par ailleurs, ce procédé de commande permet d'obtenir des temps de réponses relativement élevés par rapport à des commandes de régulation proportionnel-intégral.

Avantageusement et de manière non limitative, lesdites valeurs de seuils positive et négative sont opposées. Ainsi, on peut optimiser le fonctionnement du procédé, notamment sa vitesse d'exécution, en procédant à des comparaisons sur les valeurs absolues des valeurs de seuils.

Avantageusement et de manière non limitative, le procédé de commande comprend une étape d'intégration lorsque ladite différence est comprise entre les valeurs de seuil negative et positive, ladite étape d'intégration définissant un terme intégré destiné à être ajouté à ladite valeur estimée.

En particulier le terme intégré pourra être fonction de la différence, aussi appelée erreur.

Notamment, le terme intégré pourra être proportionnel à une valeur de l'intégrale de l'erreur.

Ainsi, on peut lisser les variations du facteur d'équivalence énergétique, notamment lorsque la différence entre la valeur instantanée de l'état d'énergie de l'accumulateur électrique et la valeur cible de l'état d'énergie de l'accumulateur électrique est relativement faible.

Avantageusement et de manière non limitative, le procédé de commande peut comprendre une étape de limitation de ladite valeur estimée du facteur d'équivalence énergétique au cours de laquelle ladite valeur estimée est limitée par des bornes définies par ladite valeur minimale prédéterminée et par ladite valeur maximale prédéterminée.

Il est entendu qu'on parle ici de la valeur estimée, qu'elle ait été ou non sommée, et donc modifiée, par un terme intégré tel que décrit précédemment.

Ainsi, on peut assurer un bon fonctionnement du véhicule automobile, en s'assurant que le facteur d'équivalence énergétique est toujours compris entre des limites de fonctionnement du facteur d'équivalence énergétique acceptables. On peut aussi parler pour cette étape de limitation, d'une étape de saturation de la valeur estimée du facteur d'équivalence énergétique.

Notamment, on peut ainsi limiter les risques de détérioration ou d'usure prématurée de l'accumulateur électrique.

L'invention concerne aussi un dispositif de commande d'un facteur d'équivalence énergétique correspondant à une valeur de pondération appliquée entre un apport d'énergie d'origine thermique et un apport d'énergie d'origine électrique, pour minimiser sur un point de fonctionnement la consommation énergétique globale d'un groupe motopropulseur hybride pour un véhicule automobile comprenant un moteur thermique et au moins un moteur électrique alimenté par un accumulateur électrique, ledit dispositif comprenant :

- des moyens de réception d'une valeur instantanée de l'état d'énergie de l'accumulateur électrique, par exemple un capteur de l'accumulateur électrique, ou encore un processeur, un DSP, ou un microcontrôleur mettant en oeuvre un modèle de fonctionnement de l'accumulateur électrique, et un bus de transmission des données issues du capteur, ou tout autre moyen adapté,
- des moyens pour calculer une différence entre ladite valeur instantanée de l'état d'énergie de l'accumulateur électrique et une valeur cible de l'état d'énergie de l'accumulateur électrique, par exemple un processeur, un DSP, un microcontrôleur, ou tout autre moyen adapté,
- des moyens pour comparer ladite différence avec au moins une valeur de seuil positive et au moins une valeur de seuil négative, par exemple un processeur, un DSP, un microcontrôleur, ou tout autre moyen adapté, identiques ou non aux moyens pour calculer la différence,
- des moyens pour calculer une valeur estimée du facteur d'équivalence énergétique, par exemple un processeur, un DSP, un microcontrôleur, ou tout autre moyen adapté, identiques ou non aux moyens pour calculer la différence et/ou aux moyens pour comparer la différence avec la au moins une valeur de seuil, ladite valeur estimée étant :

∘ proportionnelle à une valeur maximale prédéterminée lorsque ladite différence est inférieure à ladite valeur de seuil négative, ou

∘ proportionnelle à une valeur minimale prédéterminée lorsque ladite différence est supérieure à ladite valeur de seuil positive, ou

∘ fonction de ladite différence, desdites valeurs de seuil négative et positive, et des valeurs minimales et maximales prédéterminées lorsque ladite différence est comprise entre la valeur de seuil négative et la valeur de seuil positive.

L'invention concerne aussi un véhicule automobile comprenant un dispositif de commande d'un facteur d'équivalence énergétique tel que décrit précédemment.

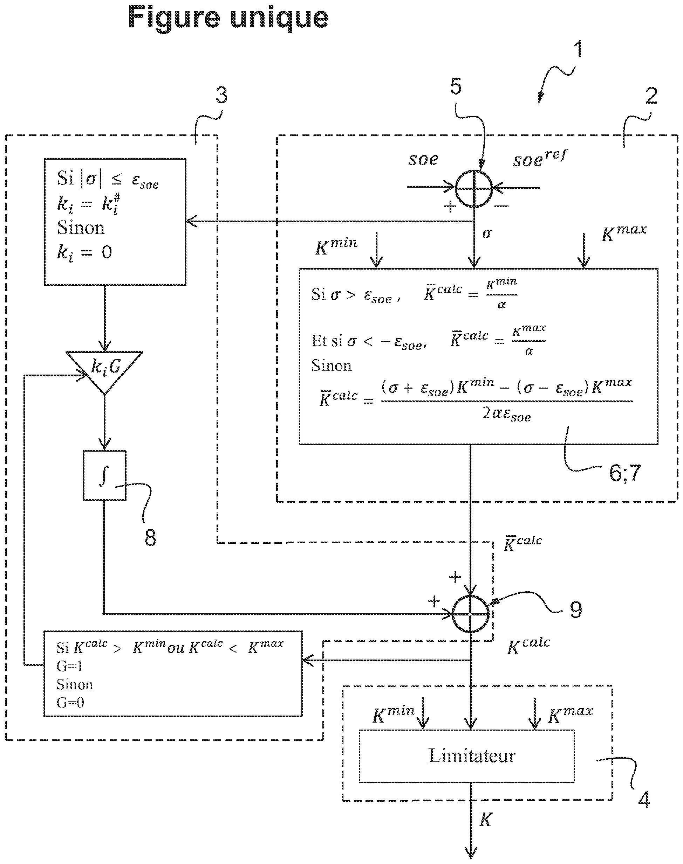

D'autres particularités et avantages de l'invention ressortiront à la lecture de la description faite ci-après d'un mode de réalisation particulier de l'invention, donné à titre indicatif mais non limitatif, en référence à la figure unique qui représente un schéma fonctionnel d'un procédé de commande d'un facteur d'équivalence énergétique selon un mode de réalisation de l'invention.

En référence à la figure unique, le procédé de commande 1 assurant un pilotage du facteur d'équivalence énergétique d'un véhicule automobile hybride, comprend une étape d'estimation 2 d'une valeur $\overline{K}^{calc}$ du facteur d'équivalence énergétique K.

L'étape d'estimation 2 comprend tout d'abord une première étape 5 de calcul d'erreur σ, dans laquelle on procède au calcul de la valeur de la différence σ, aussi communément appelée erreur σ, entre la valeur instantanée soe de l'état d'énergie de l'accumulateur électrique et la valeur cible soe$^{ref}$ de l'état d'énergie de l'accumulateur électrique.

Le calcul 5 de l'erreur σ est effectué par la soustraction soe - soe$^{ref}$ de la valeur instantanée soe de l'état d'énergie par la valeur cible soe$^{ref}$.

L'erreur σ peut être une valeur positive ou négative.

D'un point de vue général, l'erreur σ est négative lorsque la valeur cible soe$^{ref}$ est faible, par exemple entre 0% et 10% de la valeur maximale de l'état d'énergie de l'accumulateur électrique. Dans ce cas, la commande visera à décharger l'accumulateur électrique, et donc à favoriser la consommation de l'énergie électrique.

Au contraire, l'erreur σ est positive lorsque la valeur cible soe$^{ref}$ est grande, par exemple entre 90% et 100% de la valeur maximale de l'état d'énergie de l'accumulateur électrique. Dans ce cas, la commande visera à recharger l'accumulateur électrique.

Après l'étape de calcul d'erreur 5, on procède à une étape de comparaison 6 entre l'erreur σ et deux valeurs de seuil ε$_{soe}$, -ε$_{soe}$.

Ici, on compare l'erreur σ à deux valeurs de seuil, une valeur de seuil positive ε$_{soe}$, et une valeur de seuil négative -ε$_{soe}$.

Les deux valeurs de seuil sont opposées. Autrement dit, les deux valeurs de seuil ε$_{soe}$, -ε$_{soe}$ sont égales en valeur absolue.

Selon une alternative, les deux valeurs de seuil peuvent avoir des valeurs absolues différentes.

Préférentiellement, les valeurs de seuil ε$_{soe}$, -ε$_{soe}$ sont en valeur absolue proches de zéro, par exemple comprises entre 0 et 1.

L'étape de comparaison 6 distingue trois cas :

- Si l'erreur σ est inférieure à la valeur de seuil négative -ε$_{soe}$;
- Si l'erreur σ est supérieure à la valeur de seuil positive ε$_{soe}$ ;
- Si l'erreur σ est comprise entre la valeur de seuil négative -ε$_{soe}$ et la valeur de seuil positive ε$_{soe}$.

En fonction du résultat de l'étape de comparaison 6, on procède alors à une étape de calcul 7 de la valeur estimée $\overline{K}^{calc}$ du facteur d'équivalence énergétique K.

Si l'erreur σ est inférieure à la valeur de seuil négative -ε$_{soe}$, la valeur estimée $\overline{K}^{calc}$ est déterminée par le calcul suivant :

$$\overline{K}^{calc} = \frac{K^{max}}{\alpha} \qquad (1)$$

Dans lequel :
$K^{max}$ est une valeur maximale acceptable du facteur d'équivalence, et $\alpha$ est une valeur prédéterminée, supérieure à 1.

La valeur $\alpha$ est une valeur pré-étalonnée, et constante.

Si l'erreur σ est supérieure à la valeur de seuil positive ε$_{soe}$, la valeur estimée $\overline{K}^{calc}$ est déterminée par le calcul suivant :

$$\overline{K}^{calc} = \frac{K^{min}}{\alpha} \qquad (2)$$

Dans lequel :
$K^{min}$ est une valeur minimale acceptable du facteur d'équivalence.

Les valeurs maximales $K^{max}$ et minimales $K^{min}$ du facteur d'équivalence énergétique acceptables, sont prédéterminées en fonction de l'accumulateur électrique. Autrement dit, ces valeurs sont des constantes de fonctionnement de l'accumulateur électrique.

Si l'erreur σ est comprise entre la valeur de seuil négative -ε$_{soe}$ et la valeur de seuil positive ε$_{soe}$, la valeur estimée $\overline{K}^{calc}$ est déterminée par le calcul suivant :

$$\overline{K}^{calc} = \frac{(\sigma + \varepsilon_{soe})K^{min} - (\sigma - \varepsilon_{soe})K^{max}}{2\alpha\varepsilon_{soe}} \qquad (3)$$

Selon une alternative, l'erreur $\sigma$ pourra être comparée à une seule valeur de seuil $\varepsilon_{soe}$, par exemple une valeur proche de zéro, inférieure ou supérieure à zéro, ou encore égale à zéro.

Dans cette alternative, les étapes de comparaison 6 et de calcul 7 seront similaires à celles décrites précédemment pour deux valeurs de seuil, à la différence que la comparaison 6 ne prendra en compte que les cas où l'erreur $\sigma$ est supérieure ou inférieure à l'unique valeur de seuil $\varepsilon_{soe}$ ; et l'étape de calcul 7 ne considérera alors que les deux premiers calculs (1) et (2) décrits précédemment, en substituant simplement les valeurs négatives et positives par l'unique valeur de seuil, le troisième calcul (3) n'étant adapté que lorsque deux valeurs de seuil sont prises en compte.

Ainsi, la valeur estimée $\overline{K}^{calc}$ du facteur d'équivalence énergétique est obtenue par une étape d'estimation 2 robuste.

Autrement dit, on estime une valeur du facteur d'équivalence énergétique indépendamment des conditions de roulage du véhicule automobile, ou des paramètres physiques du véhicule automobile.

Cette étape d'estimation 2 est en conséquence relativement simple à adapter à différentes systèmes et ne nécessite pas d'étalonnage complexe et coûteux pour fonctionner.

En outre, l'étape d'estimation 2 est adaptative. En effet, au cours de cette étape, on estime l'erreur $\sigma$ avant d'évaluer la valeur estimée $\overline{K}^{calc}$. Autrement dit, notre procédé regarde le système avant d'agir.

De cette manière, on peut estimer une valeur $\overline{K}^{calc}$ du facteur d'équivalence énergétique de manière robuste et adaptative.

Après avoir estimé la valeur $\overline{K}^{calc}$ du facteur d'équivalence énergétique K, lors de l'étape d'estimation 2, on procède à une étape d'intégration 3.

Lors de l'étape d'intégration 3, on détermine un terme intégré 8 en fonction de l'erreur $\sigma$ :

- si l'erreur $\sigma$ est comprise entre la valeur de seuil négative $-\varepsilon_{soe}$ et la valeur de seuil positive $\varepsilon_{soe}$, le terme intégré 8 est fonction d'un gain prédéfini $k_i G$. Autrement dit, le terme intégré 8 correspond, après transformée de Laplace, à la fonction $\dfrac{1}{p} k_i G \sigma$ ; et

- si l'erreur $\sigma$ est inférieure à la valeur de seuil négative $-\varepsilon_{soe}$ ou si l'erreur $\sigma$ est supérieure à la valeur de seuil positive $\varepsilon_{soe}$, le terme intégré 8 est égal à zéro.

Après avoir déterminé le terme intégré 8, on l'additionne à la valeur estimée $\overline{K}^{calc}$, lors d'une étape de sommation 9 de l'étape d'intégration 3, en fonction de la valeur de l'erreur $\sigma$, tel que décrit ci-dessus.

L'étape d'intégration 3 permet de lisser la variation du facteur d'équivalence énergétique K lorsque la valeur instantanée soe de l'état d'énergie de l'accumulateur électrique est relativement proche de l'état d'énergie cible soe$^{ref}$. On obtient à l'issue de l'étape d'intégration une valeur lissée $K^{calc}$ de la valeur estimée $\overline{K}^{calc}$.

En effet, les valeurs de seuil positives $\varepsilon_{soe}$ et négatives $-\varepsilon_{soe}$ sont des valeurs relativement proches de zéro, définissant des seuils entre lesquelles l'erreur $\sigma$ est considérée comme faible. On cherche alors à stabiliser les variations du facteur d'équivalence énergétique K, afin d'optimiser la consommation énergétique globale.

Après l'étape d'intégration 3, on procède à une étape de limitation 4, au cours de laquelle on vérifie que la valeur lissée $K^{calc}$ est comprise entre les valeurs maximales $K^{max}$ et minimales $K^{min}$ du facteur d'équivalence énergétique acceptables. Si la valeur lissée $K^{calc}$ sort de ces limites, elle est ramenée à la valeur maximale ou minimale la plus proche.

Autrement dit, on procède à une saturation 4 des valeurs lissées $K^{calc}$ afin de les garder entre les valeurs maximales $K^{max}$ et minimales $K^{min}$ du facteur d'équivalence énergétique acceptables. Ceci permet d'assurer un fonctionnement correct du système à chaque instant de fonctionnement, notamment de manière à ne pas provoquer de risque de détérioration de l'accumulateur électrique.

La valeur obtenue après l'étape de limitation 4 correspond à la valeur du facteur d'équivalence énergétique K commandé par le procédé.

L'invention ne se limite aucunement au mode de réalisation décrit.

En particulier, les étapes d'intégration 3 et de limitation 4 sont des étapes optionnelles, qui peuvent être présentes ou non, indépendamment l'une de l'autre, du procédé de commande 1 mis en oeuvre.

**Revendications**

1. Procédé de commande (1) d'un facteur d'équivalence énergétique (K) correspondant à une valeur de pondération appliquée entre un apport d'énergie d'origine thermique et un apport d'énergie d'origine électrique, pour minimiser sur un point de fonctionnement la consommation énergétique globale d'un groupe motopropulseur hybride pour un véhicule automobile comprenant un moteur thermique et au moins un moteur électrique alimenté par un accumulateur électrique,

   le procédé comprenant une étape d'estimation (2) d'une valeur ($\overline{K}^{calc}$) dudit facteur d'équivalence énergétique (K) en fonction de la différence ($\sigma$) entre une valeur instantanée (soe) de l'état d'énergie de l'accumulateur électrique et une valeur cible (soe$^{ref}$) de l'état d'énergie de l'accumulateur électrique, **caractérisé en ce que** l'étape d'estimation (2) comprend :

   - une étape de comparaison (6) de ladite différence (σ) avec au moins une valeur de seuil positive (ε<sub>soe</sub>) et au moins une valeur de seuil négative (-ε<sub>soe</sub>), et

- une étape de calcul (7) de la valeur estimée ($\overline{K}^{calc}$) du facteur d'équivalence énergétique (K), ladite valeur estimée ($\overline{K}^{calc}$) étant :

  ◦ proportionnelle à une valeur maximale prédéterminée ($K^{max}$) lorsque ladite différence (σ) est inférieure à ladite valeur de seuil négative (-ε<sub>soe</sub>), ou
  ◦ proportionnelle à une valeur minimale prédéterminée ($K^{min}$) lorsque ladite différence (σ) est supérieure à ladite valeur de seuil positive (ε<sub>soe</sub>), ou
  ◦ fonction de ladite différence (σ), desdites valeurs de seuil négative (-ε<sub>soe</sub>) et positive (ε<sub>soe</sub>), et des valeurs minimales et maximales prédéterminées ($K^{min}$,$K^{max}$) lorsque ladite différence (σ) est comprise entre la valeur de seuil négative (-ε<sub>soe</sub>) et la valeur de seuil positive (ε<sub>soe</sub>).

2. Procédé de commande (1) selon la revendication 1, **caractérisé en ce que** lesdites valeurs de seuils positive (ε<sub>soe</sub>) et négative (-ε<sub>soe</sub>) sont opposées.

3. Procédé de commande (1) selon l'une quelconque des revendications 1 ou 2, **caractérisé en ce qu'**il comprend une étape d'intégration (3) lorsque ladite différence (σ) est comprise entre la valeur de seuil négative (-ε<sub>soe</sub>) et la valeur de seuil positive (ε<sub>soe</sub>), ladite étape d'intégration (3) définissant un terme intégré (8) destiné à être ajouté à ladite valeur estimée ($\overline{K}^{calc}$).

4. Procédé de commande (1) selon l'une quelconque des revendications 1 à 3, **caractérisé en ce qu'**il comprend une étape de limitation (4) de ladite valeur estimée ($\overline{K}^{calc}$) du facteur d'équivalence énergétique (K) au cours de laquelle ladite valeur estimée ($\overline{K}^{calc}$) est limitée par des bornes définies par ladite valeur minimale prédéterminée ($K^{min}$) et par ladite valeur maximale prédéterminée ($K^{max}$).

5. Dispositif de commande d'un facteur d'équivalence énergétique (K) correspondant à une valeur de pondération appliquée entre un apport d'énergie d'origine thermique et un apport d'énergie d'origine électrique, pour minimiser sur un point de fonctionnement la consommation énergétique globale d'un groupe motopropulseur hybride pour un véhicule automobile comprenant un moteur thermique et au moins un moteur électrique alimenté par un accumulateur électrique, **caractérisé en ce que** ledit dispositif comprend :

- des moyens de réception d'une valeur instantanée (soe) de l'état d'énergie de l'accumulateur électrique,
- des moyens pour calculer une différence (σ) entre ladite valeur instantanée (soe) de l'état d'énergie de l'accumulateur électrique et une valeur cible (soe<sup>ref</sup>) de l'état d'énergie de l'accumulateur électrique
- des moyens pour comparer ladite différence (σ) avec au moins une valeur de seuil positive (ε<sub>soe</sub>) et au moins une valeur de seuil négative (-ε<sub>soe</sub>), et
- des moyens pour calculer une valeur estimée ($\overline{K}^{calc}$) du facteur d'équivalence énergétique (K), ladite valeur estimée ($\overline{K}^{calc}$) étant :

  ◦ proportionnelle à une valeur maximale prédéterminée ($K^{max}$) lorsque ladite différence (σ) est inférieure à ladite valeur de seuil négative (-ε<sub>soe</sub>), ou
  ◦ proportionnelle à une valeur minimale prédéterminée ($K^{min}$) lorsque ladite différence (σ) est supérieure à ladite valeur de seuil positive (ε<sub>soe</sub>), ou
  ◦ fonction de ladite différence (σ), desdites valeurs de seuil négative (-ε<sub>soe</sub>) et positive (ε<sub>soe</sub>), et des valeurs minimales et maximales prédéterminées ($K^{min}$,$K^{max}$) lorsque ladite différence (σ) est comprise entre la valeur de seuil négative (-ε<sub>soe</sub>) et la valeur de seuil positive (ε<sub>soe</sub>).

6. Véhicule automobile comprenant un dispositif de commande d'un facteur d'équivalence énergétique (K) selon la revendication 5.

**Patentansprüche**

1. Verfahren zur Steuerung (1) eines Energieäquivalenzfaktors (K), der einem Wert einer Gewichtung entspricht, die zwischen einer Zufuhr von Energie thermischen Ursprungs und einer Zufuhr von Energie elektrischen Ursprungs angewendet wird, um an einem Betriebspunkt den Gesamtenergieverbrauch eines Hybridantriebsstrangs für ein Kraftfahrzeug, der einen Verbrennungsmotor und mindestens einen von einem elektrischen Akkumulator gespeisten Elektromotor umfasst, zu minimieren, wobei das Verfahren einen Schritt der Schätzung (2) eines Wertes ($\overline{K}^{calc}$) des Energieäquivalenzfaktors (K) in Abhängigkeit von der Differenz (σ) zwischen einem momentanen Wert (soe) des Energiezustands des elektrischen Akkumulators und einem Zielwert (soe<sup>ref</sup>) des Energiezustands des elektrischen Akkumulators umfasst, **dadurch gekennzeichnet, dass** der Schritt der Schätzung (2) umfasst:

- einen Schritt des Vergleichs (6) der Differenz ($\sigma$) mit wenigstens einem positiven Schwellenwert ($\varepsilon_{soe}$) und wenigstens einem negativen Schwellenwert (-$\varepsilon_{soe}$), und
- einen Schritt der Berechnung (7) des Schätzwertes ($\overline{K}^{calc}$) des Energieäquivalenzfaktors (K), wobei der Schätzwert ($\overline{K}^{calc}$):

  ○ proportional zu einem vorbestimmten maximalen Wert ($K^{max}$) ist, wenn die Differenz ($\sigma$) kleiner als der negative Schwellenwert (-$\varepsilon_{soe}$) ist, oder
  ○ proportional zu einem vorbestimmten minimalen Wert ($K^{min}$) ist, wenn die Differenz ($\sigma$) größer als der positive Schwellenwert ($\varepsilon_{soe}$) ist, oder
  ○ eine Funktion der Differenz ($\sigma$), des negativen (-$\varepsilon_{soe}$) und des positiven ($\varepsilon_{soe}$) Schwellenwertes und des vorbestimmten minimalen und maximalen Wertes ($K^{min}$, $K^{max}$) ist, wenn die Differenz ($\sigma$) zwischen dem negativen Schwellenwert (-$\varepsilon_{soe}$) und dem positiven Schwellenwert ($\varepsilon_{soe}$) liegt.

2. Verfahren zur Steuerung (1) nach Anspruch 1, **dadurch gekennzeichnet, dass** der positive ($\varepsilon_{soe}$) und der negative (-$\varepsilon_{soe}$) Schwellenwert entgegengesetzt sind.

3. Verfahren zur Steuerung (1) nach einem der Ansprüche 1 oder 2, **dadurch gekennzeichnet, dass** es einen Schritt der Integration (3) umfasst, wenn die Differenz ($\sigma$) zwischen dem negativen Schwellenwert (-$\varepsilon_{soe}$) und dem positiven Schwellenwert ($\varepsilon_{soe}$) liegt, wobei der Schritt der Integration (3) einen integrierten Term (8) definiert, der dazu bestimmt ist, zu dem Schätzwert ($\overline{K}^{calc}$) hinzugefügt zu werden.

4. Verfahren zur Steuerung (1) nach einem der Ansprüche 1 bis 3, **dadurch gekennzeichnet, dass** es einen Schritt der Begrenzung (4) des Schätzwertes ($\overline{K}^{calc}$) des Energieäquivalenzfaktors (K) umfasst, in welchem der Schätzwert ($\overline{K}^{calc}$) durch Schranken begrenzt wird, die durch den vorbestimmten minimalen Wert ($K^{min}$) und durch den vorbestimmten maximalen Wert ($K^{max}$) definiert sind.

5. Vorrichtung zur Steuerung eines Energieäquivalenzfaktors (K), der einem Wert einer Gewichtung entspricht, die zwischen einer Zufuhr von Energie thermischen Ursprungs und einer Zufuhr von Energie elektrischen Ursprungs angewendet wird, um an einem Betriebspunkt den Gesamtenergieverbrauch eines Hybridantriebsstrangs für ein Kraftfahrzeug, der einen Verbrennungsmotor und mindestens einen von einem elektrischen Akkumulator gespeisten Elektromotor umfasst, zu minimieren, **dadurch gekennzeichnet, dass** die Vorrichtung umfasst:

- Mittel zum Empfang eines momentanen Wertes (soe) des Energiezustands des elektrischen Akkumulators,
- Mittel zum Berechnen einer Differenz ($\sigma$) zwischen dem momentanen Wert (soe) des Energiezustands des elektrischen Akkumulators und einem Zielwert (soe$^{ref}$) des Energiezustands des elektrischen Akkumulators,
- Mittel zum Vergleichen der Differenz ($\sigma$) mit wenigstens einem positiven Schwellenwert ($\varepsilon_{soe}$) und wenigstens einem negativen Schwellenwert (-$\varepsilon_{soe}$), und
- Mittel zum Berechnen eines Schätzwertes ($\overline{K}^{calc}$) des Energieäquivalenzfaktors (K), wobei der Schätzwert ($\overline{K}^{calc}$):

  ○ proportional zu einem vorbestimmten maximalen Wert ($K^{max}$) ist, wenn die Differenz ($\sigma$) kleiner als der negative Schwellenwert (-$\varepsilon_{soe}$) ist, oder
  ○ proportional zu einem vorbestimmten minimalen Wert ($K^{min}$) ist, wenn die Differenz ($\sigma$) größer als der positive Schwellenwert ($\varepsilon_{soe}$) ist, oder
  ○ eine Funktion der Differenz ($\sigma$), des negativen (-$\varepsilon_{soe}$) und des positiven ($\varepsilon_{soe}$) Schwellenwertes und des vorbestimmten minimalen und maximalen Wertes ($K^{min}$, $K^{max}$) ist, wenn die Differenz ($\sigma$) zwischen dem negativen Schwellenwert (-$\varepsilon_{soe}$) und dem positiven Schwellenwert ($\varepsilon_{soe}$) liegt.

6. Kraftfahrzeug, welches eine Vorrichtung zur Steuerung eines Energieäquivalenzfaktors (K) nach Anspruch 5 umfasst.

**Claims**

1. Method (1) for controlling an energy equivalence factor (K) corresponding to a weighting value applied between a supply of heat energy and a supply of electrical energy, in order to minimize on one operating point the overall energy consumption of a hybrid drive train for an automobile vehicle comprising a heat engine and at least one electric motor powered by an electrical accumulator,
   the method comprising a step (2) for estimating a value ($\overline{K}^{calc}$) of said energy equivalence factor (K) as a function of the difference ($\sigma$) between an instantaneous value (soe) of the energy state of the electrical accumulator and a target value (soe$^{ref}$) of the energy state of the electrical accumulator, **charac-**

**terized in that** the estimation step (2) comprises:

- a step (6) for comparing said difference ($\sigma$) with at least one positive threshold value ($\varepsilon_{soe}$) and at least one negative threshold value ($-\varepsilon_{soe}$), and
- a step (7) for calculating the estimated value ($\overline{K}^{calc}$) of the energy equivalence factor (K), said estimated value ($\overline{K}^{calc}$) being:

  ○ proportional to a predetermined maximum value ($K^{max}$) when said difference ($\sigma$) is less than said negative threshold value ($-\varepsilon_{soe}$), or
  ○ proportional to a predetermined minimum value ($K^{min}$) when said difference ($\sigma$) is greater than said positive threshold value ($\varepsilon_{soe}$), or
  ○ a function of said difference ($\sigma$), of said negative threshold value ($-\varepsilon_{soe}$) and positive threshold value ($\varepsilon_{soe}$), and of the predetermined minimum and maximum values ($K^{min}, K^{max}$) when said difference ($\sigma$) is in the range between the negative threshold value ($-\varepsilon_{soe}$) and the positive threshold value ($\varepsilon_{soe}$).

2. Control method (1) according to Claim 1, **characterized in that** said positive threshold value ($\varepsilon_{soe}$) and negative threshold value ($-\varepsilon_{soe}$) are opposing.

3. Control method (1) according to either one of Claims 1 and 2, **characterized in that** it comprises an integration step (3) when said difference ($\sigma$) is in the range between the negative threshold value ($-\varepsilon_{soe}$) and the positive threshold value ($\varepsilon_{soe}$), said integration step (3) defining an integrated term (8) intended to be added to said estimated value ($\overline{K}^{calc}$).

4. Control method (1) according to any one of Claims 1 to 3, **characterized in that** it comprises a step (4) for limiting said estimated value ($\overline{K}^{calc}$) of the energy equivalence factor (K) during which said estimated value ($\overline{K}^{calc}$) is limited by boundaries defined by said predetermined minimum value ($K^{min}$) and by said predetermined maximum value ($K^{max}$).

5. Device for controlling an energy equivalence factor (K) corresponding to a weighting value applied between a supply of heat energy and a supply of electrical energy, in order to minimize on one operating point the overall energy consumption of a hybrid drive train for an automobile vehicle comprising a heat engine and at least one electric motor powered by an electrical accumulator, **characterized in that** said device comprises:

   - means for receiving an instantaneous value (soe) of the energy state of the electrical accumulator,
- means for calculating a difference ($\sigma$) between said instantaneous value (soe) of the energy state of the electrical accumulator and a target value (soe$^{ref}$) of the energy state of the electrical accumulator,
- means for comparing said difference ($\sigma$) with at least one positive threshold value ($\varepsilon_{soe}$) and at least one negative threshold value ($-\varepsilon_{soe}$), and
- means for calculating an estimated value ($\overline{K}^{calc}$) of the energy equivalence factor (K), said estimated value ($\overline{K}^{calc}$) being:

  ○ proportional to a predetermined maximum value ($K^{max}$) when said difference ($\sigma$) is less than said negative threshold value ($-\varepsilon_{soe}$), or
  ○ proportional to a predetermined minimum value ($K^{min}$) when said difference ($\sigma$) is greater than said positive threshold value ($\varepsilon_{soe}$), or
  ○ a function of said difference ($\sigma$), of said negative threshold value ($-\varepsilon_{soe}$) and positive threshold value ($\varepsilon_{soe}$), and of the predetermined minimum and maximum values ($K^{min}, K^{max}$) when said difference ($\sigma$) is in the range between the negative threshold value ($-\varepsilon_{soe}$) and the positive threshold value ($\varepsilon_{soe}$).

6. Automobile vehicle comprising a device for controlling an energy equivalence factor (K) according to Claim 5.

# Figure unique

**EP 3 314 337 B1**

## RÉFÉRENCES CITÉES DANS LA DESCRIPTION

### Documents brevets cités dans la description

- FR 2988674